# EUROPEAN PATENT SPECIFICATION

(11) **EP 2 141 335 B1**
(45) Date of publication and mention of the grant of the patent: **10.10.2012**
(21) Application number: 09250925.6
(22) Date of filing: 30.03.2009
(51) Int. Cl.: F02C 3/34, F02C 1/08

(54) **An inlet air heating system for a gas turbine engine**
Einlassluft-Heizsystem für einen Gasturbinenmotor
Système de chauffage d'air d'admission pour moteur à turbine à gaz

(30) Priority: 01.07.2008 US 165800
(43) Date of publication of application: 06.01.2010
(73) Proprietor: United Technologies Corporation, Hartford, CT 06101 (US)
(72) Inventor: Smith, Craig F., Ashford Connecticut, 06278 (US)
(74) Representative: Leckey, David Herbert

(56) References cited:
- WO-A-99/63210
- WO-A-2008/155242
- DE-A1- 19 810 820
- DE-A1-102005 015 151
- US-B1- 6 173 562

## Description

### BACKGROUND OF THE INVENTION

The present invention relates generally to gas turbine engines and more particularly to an inlet air heating system of the engine and method of operating the same.

Gas turbine engines are known, and typically include an inlet through which air passes to a compressor section. The air is compressed in the compressor section and passed downstream into a combustion section. In the combustion section, air is mixed with fuel and burned. Products of this combustion pass downstream across turbine rotors, to drive the rotors. A good deal of control is included in modem gas turbine engines.

One recent advancement in gas turbine engines is the so-called dry low NOx or "DLN" combustion systems. These are often utilized in industrial gas turbine engines to achieve very low levels of NOx emissions, without any need for water injection. These engines typically have a very narrow operating range over which emissions are kept low.

One way to increase the operating range is a concept known as inlet bleed heat. Inlet bleed heat involves bleeding off compressor discharge air and injecting it into the inlet air passing into the gas turbine engine. This heat increases inlet air temperature and reduces the power provided by the gas turbine engine. The use of the bleed air reduces the power in that as the inlet temperature increases, the provided power decreases. Unfortunately, bleeding off compressor discharge air reduces engine efficiency.

A system having the features of the preamble of claim 1 is disclosed in DE 10200505151 A1. Other systems which re-circulate exhaust air into an inlet are disclosed in DE 19810820 A1, WO 99/63120 A1 and WO 2008/155242 A1.

### SUMMARY OF THE INVENTION

From a first aspect, the invention provides a system as set forth in claim 1. From a second aspect the invention also provides a method as set forth in claim 8.

A gas turbine engine according to an embodiment of the invention has an inlet for delivering air into a compressor section. The compressor section is connected to feed air into a combustion section, where the air mixes with fuel and combusts. The combustion section is connected to a turbine section such that products of combustion can pass over one or more turbine rotors to drive the turbine rotor(s). An exhaust communicates with the turbine section to receive the products of combustion. A bleed tap communicates the exhaust to the inlet. A control controls the amount of exhaust gasses tapped into the inlet to achieve desired operating conditions without a loss in engine efficiency.

These and other features of the present invention can be best understood from the following specification and drawings, the following of which is a brief description.

### BRIEF DESCRIPTION OF THE DRAWINGS

Figure 1 is a schematic view of a gas turbine engine incorporating a unique inlet air heating system.
Figure 2 shows a second embodiment.

### DETAILED DESCRIPTION OF THE PREFERRED EMBODIMENT

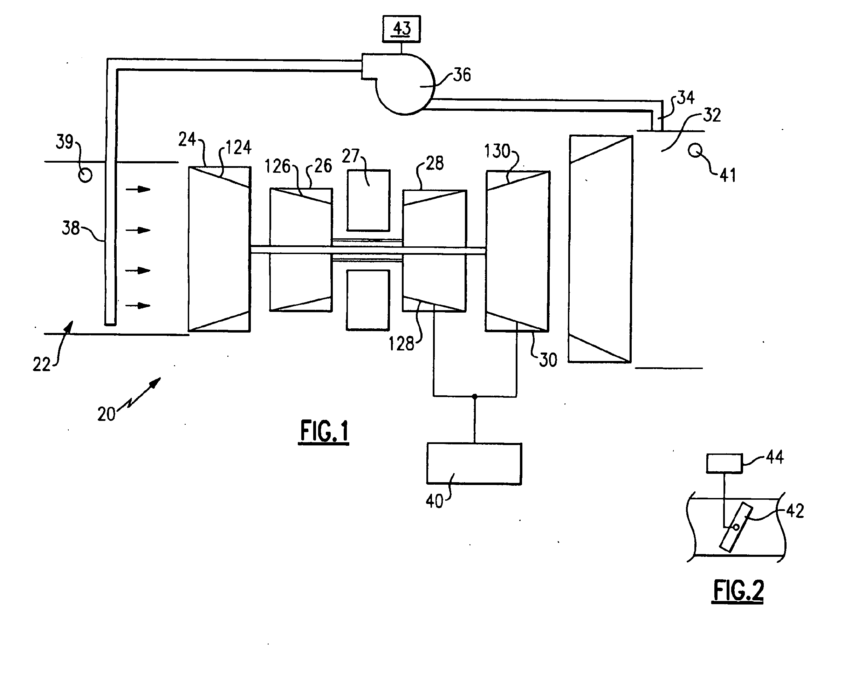

A gas turbine engine 20 is illustrated in Figure 1. An inlet 22 delivers air to a low pressure compressor section 24, and downstream to a high pressure compressor section 26. Air from the compressor section 26 passes into a combustion section 27, and is mixed with fuel and burned. Preferably, the combustion section 27 is of a dry low NOx premix (DLN) type wherein fuel and air are premixed prior to combustion to assure flame temperatures are kept uniformly low to prevent formation of NOx. Products of this combustion pass over a high pressure turbine 28, and a low pressure turbine 30, driving the turbine rotors 128 and 130. The turbine rotors in turn drive compressor rotor 126 and compressor rotor 124, respectively. Downstream of the turbine sections the products of combustion pass into an exhaust 32. As shown, a tap line 34 taps a portion of the exhaust gas through a blower 36, and into a tap line 38. The tap line 38 bleeds gas into inlet 22 in controlled amounts. Although no fan section is shown, the present invention also extends to engines including a fan located upstream of the compressor sections 26, 24.

The amount of gas bled into the inlet 22 is controlled to achieve a desired amount of power to be delivered from the turbine sections 28 and 30. As shown schematically in Figure 1, the turbine sections 28 and 30 deliver power to a generator 40.

In some applications, if the pressure difference between the exhaust 32 and the inlet 22 is sufficient, blower 36 may not be necessary. As an example, if a heat recovery steam boiler is included, the pressure difference might be sufficient. Instead, a simple damper 42, as shown schematically in Figure 2, may be sufficient. As should be appreciated, the damper is rotated under the control of a motor 44 to control the amount of air delivered from exhaust 32 to inlet 22.

Notably, the exhaust gasses may have corrosive materials produced when burning fuel. Thus, with this system bleeding air from the exhaust through the lines 34, 38, the material and coatings of the turbine sections 28 and 30, and even perhaps the compressor sections 24 and 26, should be selected to resist any potential corrosion issues.

By recirculating gas from the exhaust 32 to the inlet 22, the temperature of the inlet air can be increased, and the oxygen content reduced. Reducing the oxygen content may further reduce NOx emissions.

A worker of ordinary skill in this art would recognize how much air to deliver from the exhaust 32 to the inlet 22 dependent upon the relative temperatures at the two locations measured by sensor 39 and sensor 41, respectively. Sensors 39, 41 send signals to a control 43 for the blower motor 36, or the damper motor 44. Control 43 can be any appropriate processor. Dependent on the desired temperature, and operating temperature, the air delivered to the compressor 24 can be between zero and twenty percent exhaust gas.

Also, the tap lines 34 and 38, along with the blower motor 36, or damper 42, can be connected to existing gas turbine engines.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A system for controlling the power provided by a gas turbine engine (20) comprising:
a tap line (34, 38) to tap exhaust gas from an exhaust (32) of a gas turbine engine (20), and deliver the tapped exhaust gas to an inlet (22) of the gas turbine engine (20); and
a control (43) for controlling an amount of tapped exhaust gas that is delivered to the inlet (22) of the gas turbine engine (20) to achieve desired operating conditions, the amount of gas tapped from the exhaust (32) to the inlet (22) being controlled to achieve a desired inlet temperature at the inlet (22); **characterised in that**:
the system further comprises temperature sensors (39, 41) which sense the temperature at the inlet (22) and the exhaust (32) and send signals to the control (43), the amount of tapped gas delievered to the inlet by the control being dependent on the relative temperatures sensed at the inlet (22) and the exhaust (32).

2. The system as set forth in claim 1, wherein the control (43) controls a blower (36) to control the amount of exhaust gas passing from the exhaust (32) to the inlet (22).

3. The system as set forth in claim 1, wherein the control (43) controls a damper (42) to control the amount of exhaust gas passing from the exhaust (32) to the inlet (22).

4. The system as set forth in any preceding claim wherein the air delivered to the inlet is between zero and twenty percent exhaust gas.

5. A gas turbine engine (20) comprising:
an inlet (22) for delivering air into a compressor section (24);
the compressor section (24) connected to feed air into a combustion section (27), wherein the air mixes with fuel and combusts, and the combustion section (27) connected to a turbine section (28) such that products of combustion can pass over a turbine rotor (128) in the turbine section (28) to drive the turbine rotor (128);
an exhaust (32) for communicating with the turbine section (28) to receive the products of combustion; and
a system as set forth in any preceding claim for controlling an amount of exhaust gas tapped from the exhaust (32) into the inlet (22).

6. The gas turbine engine as set forth in claim 5, wherein the turbine rotor (128) drives a generator (40) to create electricity.

7. The gas turbine engine as set forth in any claim 5 or 6 wherein the combustion section (27) is of a dry low NOx type.

8. A method of operating a gas turbine engine (20) comprising the steps of:
(a) delivering air from an inlet (22) to a compressor section (24);
(b) compressing air and delivering the air into a combustion section (27), mixing the compressed air with fuel and combusting the mixture, passing products of the combustion over turbine rotors (128,130) to drive the turbine rotors (128,130);
(c) receiving the products of combustion at an exhaust (32); and
(d) tapping gas from said exhaust (32) to said inlet (22), and controlling the amount of gas tapped to the inlet (22) to achieve a desired inlet temperature at the inlet (22) to the gas turbine engine (20); **characterised in that**:
the temperature is sensed at the inlet (22) and the exhaust (32) and **in that** the amount of tapped gas delivered to the inlet (22) is dependent upon the relative temperatures at the inlet (22) and outlet (32).

9. The method as set forth in claim 8 wherein the air delivered to the compressor is between zero and twenty percent exhaust gas.

10. The method as set forth in claim 8 or 9, wherein the turbine rotors (128, 130) drive a generator (40) to create electricity.

## Patentansprüche

1. System zum Steuern/Regeln der Leistung, die von einer Gasturbinenmaschine (20) bereitgestellt ist, umfassend:
eine Abzapfleitung (34, 38), um Abgas von einer Abgaseinheit (32) einer Gasturbinenmaschine (20) abzuzapfen, und das abgezapfte Abgases an eine Einlasseinheit (22) der Gasturbinenmaschine (20) zu liefern; und
eine Steuerung/Regelung (43) zum Steuern/Regeln einer Menge von abgezapftem Abgas, das an die Einlasseinheit (22) der Gasturbinenmaschine (20) geliefert ist, um gewünschte Betriebszustände zu erreichen, wobei die Menge an von der Abgaseinheit (32) zu der Einlasseinheit (22) abgezapftem Gas derart gesteuert/geregelt wird, dass eine gewünschte Einlasstemperatur an der Einlasseinheit (22) erreicht wird; **dadurch gekennzeichnet, dass**:
das System des Weiteren Temperatursensoren (39, 41) umfasst, welche die Temperatur an der Einlasseinheit (22) und der Abgaseinheit (32) messen und Signale an die Steuerung/Regelung (43) senden, wobei die Menge an abgezapftem Gas, das durch die Steuerung/Regelung an die Einlasseinheit geliefert ist, abhängig von den relativen Temperaturen ist, die an der Einlasseinheit (22) und der Abgaseinheit (32) gemessen werden.

2. System nach Anspruch 1, wobei die Steuerung/Regelung (43) einen Bläser (36) steuert/regelt, um die Menge an Abgas, das von der Abgaseinheit (32) zu der Einlasseinheit (22) passiert, zu steuern/ zu regeln.

3. System nach Anspruch 1, wobei die Steuerung/Regelung (43) einen Dämpfer (42) steuert/regelt, um die Menge an Abgas, das von der Abgaseinheit (32) zu der Einlasseinheit (22) passiert, zu steuern/ zu regeln.

4. System nach einem der vorangehenden Ansprüche, wobei die an die Einlasseinheit gelieferte Luft zwischen Null und Zwanzig Prozent Abgas ist.

5. Gasturbinenmaschine (20) umfassend:
eine Einlasseinheit (22) zum Liefern von Luft in einen Verdichterbereich (24);
wobei der Verdichterbereich (24) verbunden ist, um Luft in einen Brennereinrichtungsbereich (27) zu speisen, wobei sich die Luft mit Kraftstoff vermischt und verbrennt, und der Brennereinrichtungsbereich (27) mit einem Turbinenbereich (28) verbunden ist, so dass Verbrennungsprodukte über einen Turbinenrotor (128) in den Turbinenbereich (28) passieren können, um den Turbinenrotor (128) anzutreiben;
eine Abgaseinheit (32) zum Kommunizieren mit dem Turbinenbereich (28), um die Verbrennungsprodukte zu empfangen; und
ein System nach einem der vorangehenden Ansprüche zum Steuern/Regeln der Menge an von der Abgaseinheit (32) in die Einlasseinheit (22) ahgazapftem Abgas.

6. Gasturbinenmaschine nach Anspruch 5, wobei der Turbinenrotor (128) einen Generator (40) antreibt, um Elektrizität zu erzeugen.

7. Gasturbinenmaschine nach einem der Ansprüche 5 oder 6, wobei der Brennereinrichtungsbereich (27) von einem Dry-Low-NOx-Typ ist.

8. Verfahren zum Betreiben einer Gasturbinenmaschine (20) umfassend die Schritte:
(a) Liefern von Luft von einer Einlasseinheit (22) zu einem Verdichterbereich (24);
(b) Verdichten von Luft und Liefern der Luft in einen Brennereinrichtungsbereich (27), Vermischen der verdichteten Luft mit Kraftstoff und Verbrennen des Gemisches, Passieren von Verbrennungsprodukten über Turbinenrotoren (128, 130), um die Turbinenrotoren (128, 130) anzutreiben;
(c) Empfangen der Verbrennungsprodukte an einer Abgaseinheit (32); und
(d) Abzapfen von Gas von der Abgaseinheit (32) zu der Einlasseinheit (22), und Steuern/ Regeln der Menge an zu der Einlasseinheit (22) abgezapftem Gas, um eine gewünschte Einlasstemperatur an der Einlasseinheit (22) zu der Gasturbinenmaschine (20) zu erreichen: **dadurch gekennzeichnet, dass**:
die Temperatur an der Einlasseinheit (22) und der Abgaseinheit (32) gemessen ist und dadurch, dass die Menge an zu der Einlasseinheit (22) geliefertem abgezapftem Gas von den relativen Temperaturen an der Einlasseinheit (22) und der Abgaseinheit (32) abhängig ist.

9. Verfahren nach Anspruch 8, wobei die zu dem Verdichter gelieferte Luft zwischen Null und Zwanzig Prozent Abgas ist.

10. Verfahren nach Anspruch 8 oder 9, wobei die Turbinenrotoren (128, 130) einen Generator (40) antreiben, um Elektrizität zu erzeugen.

## Revendications

1. Système servant à réguler la puissance fournie par un moteur à turbine à gaz (20), le système comprenant :
une conduite de prélèvement (34, 38) servant à prélever du gaz d'échappement d'un échappement (32) du moteur à turbine à gaz (20) et à amener le gaz d'échappement prélevé à une admission (22) du moteur à turbine à gaz (20) ; et
un régulateur (43) servant à réguler une quantité de gaz d'échappement prélevé amenée à l'admission (22) du moteur à turbine à gaz (20) de manière à obtenir des conditions de fonctionnement souhaitées, la quantité de gaz prélevé de l'échappement (32) vers l'admission (22) étant régulée de manière à obtenir une température d'admission souhaitée au niveau de l'admission (22) ;
le système étant **caractérisé en ce qu'**il comprend en outre :
des capteurs de température (39, 41) qui captent la température au niveau de l'admission (22) et de l'échappement (32) et transmettent des signaux au régulateur (43), la quantité de gaz prélevé amenée à l'admission par le régulateur étant fonction des températures relatives captées au niveau de l'admission (22) et de l'échappement (32).

2. Système selon la revendication 1, le régulateur (43) commandant une soufflante (36) servant à réguler la quantité de gaz d'échappement passant de l'échappement (32) à l'admission (22).

3. Système selon la revendication 1, le régulateur (43) commandant un clapet (42) servant à réguler la quantité de gaz d'échappement passant de l'échappement (32) à l'admission (22).

4. Système selon l'une quelconque des revendications précédentes, l'air amené à l'admission comprenant entre zéro et vingt pour cent de gaz d'échappement.

5. Moteur à turbine à gaz (20), comprenant :
une admission (22) servant à amener de l'air dans une partie compresseur (24) ;
la partie compresseur (24) raccordée de manière à alimenter en air une partie combustion (27), dans laquelle l'air se mélange à du carburant et brûle, et la partie combustion (27) raccordée à une partie turbine (28) de manière à permettre aux produits de combustion de passer au-dessus d'un rotor (128) de turbine dans la partie turbine (28) pour entraîner le rotor (128) de turbine ;
un échappement (32) communiquant avec la partie turbine (28) pour recevoir les produits de combustion ; et
un système selon l'une quelconque des revendications précédentes servant à réguler une quantité de gaz d'échappement prélevé de l'échappement (32) vers l'admission (22).

6. Moteur à turbine à gaz selon la revendication 5, le rotor (128) du turbine entraînant une génératrice (40) servant à produire de l'électricité.

7. Moteur à turbine à gaz selon l'une quelconque des revendications 5 ou 6, la partie combustion (27) étant du type à sec à faible production de NOx.

8. Procédé permettant de faire fonctionner un moteur à turbine à gaz (20), le procédé comprenant les étapes consistant à :
(a) amener de l'air depuis une admission (22) jusqu'à une partie compresseur (24) ;
(b) comprimer l'air et amener l'air dans une partie combustion (27), mélanger l'air comprimé à du carburant et brûler le mélange, faire passer les produits de combustion par-dessus des rotors (128, 130) de turbine pour entraîner les rotors (128, 130) de turbine ;
(c) recevoir les produits de combustion au niveau d'un échappement (32) ; et
(d) prélever du gaz dudit échappement (32) vers ladite admission (22), et réguler la quantité de gaz prélevé vers l'admission (22) de manière à obtenir une température d'admission souhaitée au niveau de l'admission (22) du moteur à turbine à gaz (20) ;
le procédé étant caractérisé en ce due :
la température est captée au niveau de l'admission (22) et de l'échappement (32) et en ce que la quantité de gaz prélevé amenée à l'admission (22) est fonction des températures relatives au niveau de l'admission (22) et de l'échappement (32).

9. Procédé selon la revendication 8, l'air amené à la partie compresseur comprenant entre zéro et vingt pour cent de gaz d'échappement.

10. Procédé selon la revendication 8 ou 9, les rotors (128, 130) de turbine entraînant une génératrice (40) servant à produire de l'électricité.
